# EUROPEAN PATENT APPLICATION

(11) **EP 2 209 312 A1**
(43) Date of publication of application: **21.07.2010**
(21) Application number: 08757633.6
(22) Date of filing: 06.06.2008
(51) Int. Cl.: H04N 7/15, H04L 29/12

(54) **VIDEO CONFERENCE METHOD AND SYSTEM, APPLICATION SERVER AND MEDIA RESOURCE SERVER**

(30) Priority: 18.10.2007 CN 200710176044
(71) Applicant: Huawei Technologies Co., Ltd., Longgang District, Shenzhen Guangdong 518129 (CN)
(72) Inventor: XU, Yi, Shenzhen Guangdong 518129 (CN)
(74) Representative: Charles, Glyndwr
(86) International application number: PCT/CN2008/071222
(87) International publication number: WO 2009/049505

(57) **Abstract**

A video conference method and a video conference system, an application server, and a media resource server are provided. The video conference method includes: receiving a viewing request message sent by a receiving terminal to request to view a video from a sending terminal; establishing an uplink media connection from the sending terminal to the media resource server; establishing a downlink media connection from the media resource server to the receiving terminal; and receiving a media stream sent by the sending terminal through the uplink media connection, and sending the media stream to the receiving terminal through the downlink media connection. Accordingly, different participants at the site can freely select to view a video from any other participant through terminals flexibly and conveniently.

## Description

### FIELD OF THE TECHNOLOGY

The present invention relates to a video conference technology, and more particularly to a video conference method and a video conference system, an application server, and a media resource server.

### BACKGROUND OF THE INVENTION

A video conference service may be carried on a circuit switched network or a packet switched network. The video conference system based on Internet Protocol (IP) packet switching includes two types, that is, session initiation protocol (SIP) and audio-visual and multimedia system protocol H.323. The H.323 protocol has developed based on H.320 and includes rich function sets and various conference control functions, which can realize functions such as chair control and remote control conveniently, and is a relatively mature protocol suite for establishing a video conference network. Currently, the H.323 protocol is mainly employed to construct a video conference system.

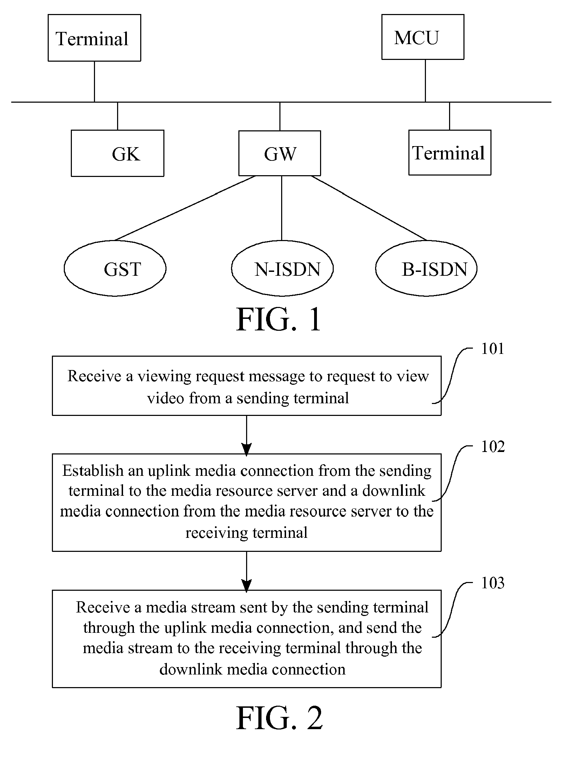

FIG. 1 is a schematic structural view of a video conference system based on an H.323 protocol in the prior art. Referring to FIG. 1, a video conference network using the H.323 system architecture is mainly formed by terminals, a gatekeeper (GK), a gateway (GW), and a multipoint control unit (MCU). The terminal is a node device for providing real-time bi-directional communication function, the main functions of which are to collect video/audio signals, process the video/audio signals, and send the processed video/audio signals to the MCU or other terminals, and meanwhile receive video/audio signals, process the video/audio signals, and send the processed video/audio signals to a corresponding output device. The H.323 terminal may establish the end-to-end connection with other non-H.323 terminals through a general switch telephone (GST), a narrowband-integrated services digital network (N-ISDN), or a broadband-integrated services digital network (B-ISDN). The GK is a manager of a domain and plays an important role in the system. The main functions of the GK are to perform authentication and accounting, address resolution, domain management, and bandwidth management.

The GW performs conversion between the H.323 protocol and other non-H.323 protocols, so as to realize the interworking between the H.323 terminal and other non-H.323 terminals. The H.323 system is compatible with various terminals through the GW, so as to protect the existing investment. The MCU is a specific device for the video conference system and is formed by two parts, in which one part is a multipoint controller (MC) mainly responsible for processing control information in the conference, and the other part is a multipoint processor (MP) mainly responsible for processing audio, video, and data information. The MC and the MP may be physically one device or two independent devices.

The implementation of the H.323 protocol is complex and inflexible. In the conference system based on the H.323 protocol, all conference participants establish communication connections with the MCU, a speaker transfers all audio and video data and control information to the MCU in a point-to-point manner through a terminal, and the MCU processes the audio and video data and control information sent by the speaker, and transfers the processed audio and video data and control information to all the conference participants by broadcasting. In this manner, only one conference participant is permitted to act as the speaker, and all the conference participants at the site can merely view the audio and video of only one speaker at the same time, but cannot view the audios and videos of other speakers.

In order to view the videos of more speakers in the H.323 conference system, a video-mixing screen, that is, a split screen for mixing various video together is added in the H.323 conference system in the prior art. Specifically, a plurality of speakers at the site separately transfers all audio and video data and control information to the MCU in a point-to-point manner through their respective terminals, and then the MCU collates and encapsulates the audio and video data and control information of the plurality of speakers, and sets the packet on the video-mixing screen through a link. In this way, the MCU may send an audio and a video of any one of the plurality of speakers to all the conference participants by broadcasting according to an instruction of the conference host, so that the conference participants can view audios and videos of different speakers according to specific demands. Nevertheless, the prior has at least the following problems.

All the participants of the H.323 conference system at the site can see the audio and video in the same path only, and different participants cannot freely select audios and videos of the speakers. Moreover, the video-mixing screen further increases the structural complexity of the system. In addition, the hardware system of the video-mixing screen has high costs, which further increases the costs of the entire conference system.

### SUMMARY OF THE INVENTION

To solve the technical problems that all participants at the site of an H.323 conference system in the prior art can view audio and video in the same path only, different participants cannot freely select audios and videos of speakers, and the video-mixing screen further increases the structural complexity and costs of the system, the present invention is directed to a video conference method and a video conference system, an application server, and a media resource server.

According to an embodiment, the disclosure provides a video conference method, which includes the following steps:
A viewing request message sent by a receiving terminal to request to view a video from a sending terminal is received.
An uplink media connection from the sending terminal to a media resource server and a downlink media connection from the media resource server to the receiving terminal are established.

A media stream sent by the sending terminal is received through the uplink media connection, and the media stream is sent to the receiving terminal through the downlink media connection.

According to another embodiment, the disclosure provides an application server, which includes an information receiving module, a resource requesting module, an establishing module, and a connection processing module.

The information receiving module is adapted to receive a viewing request message sent by a receiving terminal to view a video from a sending terminal, and acquire a user identification of the sending terminal and a user identification of the receiving terminal from the viewing request message.

The resource requesting module is adapted to request to allocate media resources to the receiving terminal according to the viewing request message and the user identification of the receiving terminal.

The establishing module is adapted to establish a downlink media channel from a media resource server to the receiving terminal according to the request from the resource requesting module.

The connection processing module is adapted to establish an uplink media connection from the sending terminal to the media resource server and a downlink media connection from the media resource server to the receiving terminal according to the viewing request message, the user identification of the sending terminal, and the user identification of the receiving terminal.

According to still another embodiment, the disclosure provides a media resource server, which includes an information receiving and forwarding module, a resource allocation module, and a media distribution module.

The information receiving and forwarding module is adapted to receive and forward resource request information and a media stream.

The resource allocation module is adapted to allocate media resources to a terminal corresponding to a user identification carried in the resource request information according to the resource request information received by the information receiving and forwarding module.

The media distribution module is adapted to establish a connection between a sending terminal and a receiving terminal according to the link addresses of the sending terminal and the receiving terminal, where the link addresses are carried in the resource request information received by the information receiving and forwarding module, and send a media stream to the receiving terminal through the link address of the receiving terminal, where the media stream is sent by the sending terminal through the link address of the sending terminal.

According to yet another embodiment, the disclosure provides a video conference system, which includes an application server and a media resource server.

The application server is adapted to receive a viewing request message sent by a receiving terminal to view a video from a sending terminal, acquire a user identification of the sending terminal and a user identification of the receiving terminal from the viewing request message, request the media resource server to allocate media resources to the receiving terminal, establish a downlink media channel from the media resource server to the receiving terminal, and establish an uplink media connection from the sending terminal to the media resource server and a downlink media connection from the media resource server to the receiving terminal.

The media resource server is adapted to receive resource request information sent by the application server, allocate media resources to a terminal corresponding to a user identification carried in the resource request information, establish a connection between the sending terminal and the receiving terminal according to the link addresses of the sending terminal and the receiving terminal, where the link addresses are carried in the resource request information, and send a media stream to the receiving terminal through the link address of the receiving terminal, where the media stream is sent by the sending terminal through the link address of the sending terminal.

According to one or more embodiments, a terminal corresponding to any conference participant may act as a receiving terminal to request to view a video from any other sending terminal, and after a viewing request message sent by the receiving terminal is received, a downlink media connection from a media resource server to the receiving terminal is established, and a media stream sent by the sending terminal is sent to the receiving terminal through the downlink media connection. In this way, different participants at the site can freely select to view a video from any other participant through terminals flexibly and conveniently. Moreover, it is not required to support a video-mixing screen, so that the video conference system has a simplified structure and a reduced system costs as compared with the prior art.

### BRIEF DESCRIPTION OF THE DRAWINGS

FIG. 1 is a schematic structural view of a video conference system based on an H.323 protocol in the prior art;
FIG. 2 is a flow chart of an embodiment of a video conference method ;
FIG. 3 is a flow chart of another embodiment of the video conference method ;
FIG. 4 is a flow chart of still another embodiment of the video conference method ;
FIG. 5 is a flow chart of yet another embodiment of the video conference method ;
FIG. 6 is a schematic structural view of a plurality of embodiments of an application server ;
FIG. 7 is a schematic structural view of a plurality of embodiments of a media resource server; and
FIG. 8 is a schematic structural view of a plurality of embodiments of a video conference system.

### DETAILED DESCRIPTION OF THE EMBODIMENTS

In the embodiments of the disclosure, after a viewing request message sent by a receiving terminal to request to view a video from a sending terminal is received, a downlink media connection from a media resource server to the receiving terminal is established, and a media stream transmitted by the sending terminal is sent to the receiving terminal through the downlink media connection.

FIG. 2 is a flow chart of an embodiment of a video conference method. Referring to FIG. 2, the video conference method in this embodiment includes the following steps:
In step 101, a viewing request message sent by a receiving terminal to request to view a video from a sending terminal is received. The viewing request message carries a user identification of the sending terminal and a user identification of the receiving terminal. Because the SIP has advantages of simplicity and flexibility with respect to the H.323 protocol, the viewing request message may be sent by the receiving terminal through the SIP in this step. This step may be implemented by an application server.
In step 102, an uplink media connection from the sending terminal to the media resource server and a downlink media connection from the media resource server to the receiving terminal are established. This step may be implemented by the application server.
In step 103, a media stream sent by the sending terminal is received through the uplink media connection, and the media stream is sent to the receiving terminal through the downlink media connection. This step may be implemented by the media resource server.

By establishing the uplink media connection from the sending terminal to the media resource server and the downlink media connection from the media resource server to the receiving terminal, the media stream sent by the sending terminal is received through the uplink media connection, and the media stream is sent to the receiving terminal through the downlink media connection. Thus, different participants in the conference can freely select to view a video of any other participant through terminals flexibly and conveniently, and moreover, it is not required to support a video-mixing screen, so that the video conference system has a simple structure and low costs.

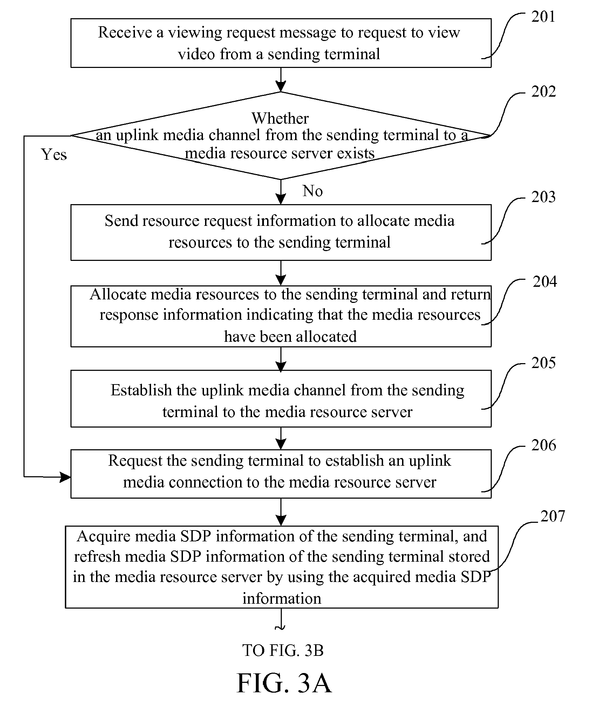

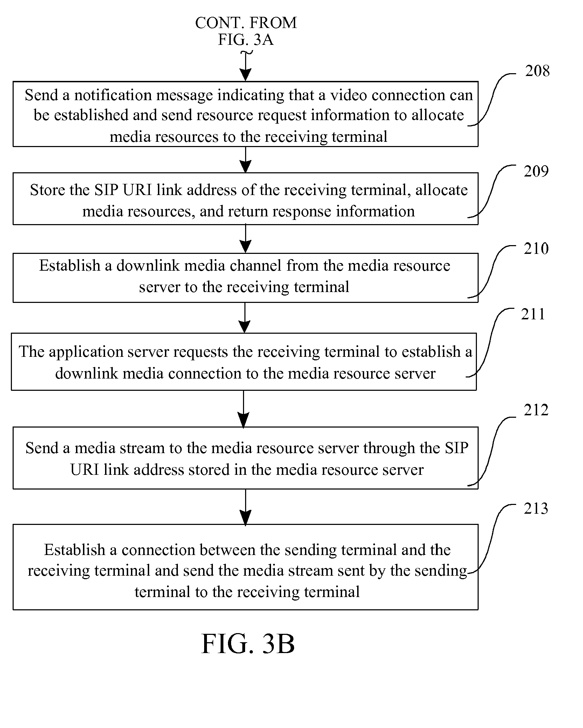

FIG. 3 is a flow chart of another embodiment of the video conference method. Referring to FIG. 3, the video conference method in this embodiment includes the following steps:
In step 201, a receiving terminal sends a viewing request message to request to view a video from a sending terminal to an application server. The viewing request message carries a user identification of the sending terminal and a user identification of the receiving terminal. A destination address carried in the viewing request message is an identification of the application server. The user identification of the sending terminal, the user identification of the receiving terminal, or the identification of the application server may be an IP-based SIP universal resource identifier (URI). The viewing request message may be sent through a "REFER" message. The following shows a specific example of the "REFER" message sent by the receiving terminal to the application server:
   REFER sip: conference1@mrfc1.home1.net SIP/2.0
   Max-Forwards: 70
   P-Preferred-Identity: "John Doe" <sip:user1_public1@home1.net>
   From: <sip:user1_public1@home1.net>; tag=171828
   To: <sip: conference1@mrfc1.home1.net>; tag=314159
   Call-ID: cb03a0s09a2sdfg1kj490333
   Cseq: 127 REFER
   Refer-To: <sip:user2_public1@home2.net;method=INVITE>
   User-Agent:Conf-serv/3GPP
   Content-Type: application/xml
   Content-Length: (...)
   <query xmlns="dconf.video:apply"/>

In the "REFER" message, From: <sip:user1_public1@home1.net> indicates that a SIP URI of the receiving terminal that sends the "REFER" message is user1_public1@home1.net; To: <sip: conference1@mrfc1.home1.net> indicates that a destination address of the "REFER" message, that is, a SIP URI of the application server that receives the "REFER" message is conference1@mrfc1.home1.net; Refer-To:<sip:user2_public1@home2.net;methoD=INVITE > indicates that a SIP URI of the sending terminal with the video that the receiving terminal requests to view is user2_public1@home2.net; and <query xmlns="dconf:video:apply"/> indicates to view of the video.

In step 202, after receiving the viewing request message, the application server determines whether an uplink media channel from the sending terminal to a media resource server connected to the application server exists according to the SIP URI of the sending terminal carried in the viewing request message. If the uplink media channel exists, step 206 is performed; otherwise, step 203 is performed.

In step 203, the application server sends resource request information to the media resource server to allocate media resources to the sending terminal. The resource request information may be sent through a session description protocol (SDP). The resource request information carries an IP address of the sending terminal and an IP address allocated to the receiving terminal. The IP address of the sending terminal and the IP address of the receiving terminal may be SIP URI link addresses.

In step 204, the media resource server allocates media resources to the sending terminal according to the IP address of the sending terminal and returns response information indicating that the media resources have been allocated to the sending terminal to the application server.

In step 205, the application server establishes the uplink media channel from the sending terminal to the media resource server.

In step 206, the application server requests the sending terminal to establish an uplink media connection to the media resource server.

In step 207, the application server acquires media SDP information of the sending terminal that contains the IP address of the sending terminal, and refreshes media SDP information of the sending terminal stored in the media resource server by using the acquired media SDP information of the sending terminal.

Through step 207, the IP address of the sending terminal is updated to ensure the validity of the IP address of the sending terminal. If the IP address of the sending terminal is a valid IP address in step 201, step 207 may be skipped.

In step 208, the application server sends a notification message indicating that a video connection can be established to the sending terminal; meanwhile, the application server sends resource request information to the media resource server to allocate media resources to the receiving terminal. The resource request information may be sent through the SDP. The resource request information carries a SIP URI link address of the receiving terminal.

In step 209, the media resource server stores the SIP URI link address of the receiving terminal, allocates media resources to the receiving terminal, and returns response information indicating that the media resources have been allocated to the receiving terminal to the application server.

In step 210, the application server establishes a downlink media channel from the media resource server to the receiving terminal according to the IP address of the receiving terminal.

In step 211, the application server requests the receiving terminal to establish a downlink media connection to the media resource server.

In addition, steps 210-211 may be performed before or simultaneously with steps 202-209.

In step 212, the sending terminal sends a media stream to the media resource server through the SIP URI link address stored in the media resource server.

In step 213, the media resource server respectively establishes a connection between the sending terminal and the receiving terminal according to a user SIP URI of the sending terminal and a user SIP URI of the receiving terminal and sends the media stream sent by the sending terminal to the receiving terminal.

In step 202, after receiving the "REFER" message, the application server may return a "202" message to the receiving terminal to acknowledge the "REFER" message; and when the operation performed on the "REFER" message succeeds or fails, the application server sends a "NOTIFY" message to the receiving terminal to notify a corresponding processing result to the receiving terminal.

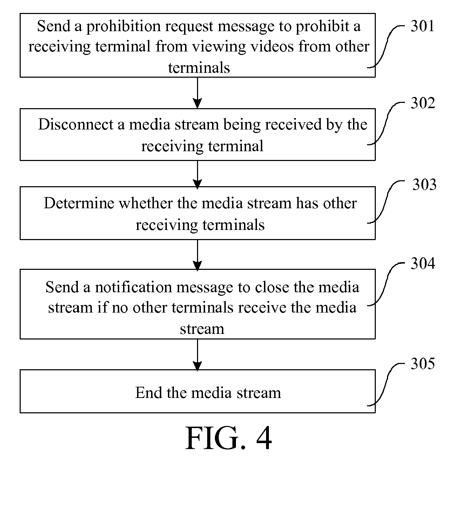

When a receiving terminal views the videos from other sending terminals, a terminal functioning as a host may send prohibition request message to request the application server to prohibit the receiving terminal from viewing videos from other sending terminals. FIG. 4 is a flow chart of still another embodiment of the video conference method. Referring to FIG. 4, the specific process of the video conference method in this embodiment is as follows.

In step 301, a terminal functioning as a host sends a prohibition request message to an application sever to prohibit a receiving terminal from viewing videos from other terminals. The prohibition request message carries a user identification of the receiving terminal that is requested to prohibit. A destination address of the prohibition request message is an identification of the application server. The user identification of the receiving terminal or the identification of the application server may be an IP-based SIP URI. The prohibition request message may be sent through a "REFER" message. The following shows a specific example of the "REFER" message sent by the terminal functioning as the host to the application server:
REFER sip: conference1@mrfc1.home1.net SIP/2.0
Max-Forwards: 70
P-Preferred-Identity: "John Doe" <sip:user1_public1@home1.net>
From: <sip:user1_public1@home1.net>; tag=171828
To: <sip: conference1@mrfc1.home1.net>; tag=314159
Call-ID: cb03a0s09a2sdfg1kj490333
Cseq: 127 REFER
Refer-To: <sip:user2_public1@home2.net;method=INVITE>
User-Agent:Conf-serv/3GPP
Content-Type: application/media SDP
Content-Length: (...)
<query xmlns="dconf:video:disable"/>

In the "REFER" message, From: <sip:user1_public1@home1.net> indicates that a SIP URI of the terminal functioning as the host that sends the "REFER" message is user1_public1@home1.net; To: <sip: conference1@mrfc1.home1.net> indicates that a destination address of the "REFER" message, that is, a SIP URI of the application server that receives the **"REFER" message, is** conference1@mrfc1.home1.net; Refer-To:<sip:user2_public1@home2.net;method=INVITE> indicates that a SIP URI of the receiving terminal that is requested to prohibit is user2_public1@home2.net; and <query xmlns="dconf:video:disable"/> indicates that the receiving terminal is prohibited from viewing video.

In step 302, the application server disconnects a media stream being received by the receiving terminal.

In step 303, the application server determines whether the media stream is received by other receiving terminals.

In step 304, if no other terminals receive the media stream, the application server further sends a notification message to a media resource server to end the media stream. The notification message carries a SIP URI of a sending terminal of the media stream.

In step 305, the media resource server ends the uplink media stream sent by the sending terminal and releases media resources allocated to the sending terminal.

When no other terminals receive the uplink media stream sent by the sending terminal, the uplink media stream sent by the sending terminal is ended, and the sending terminal no longer sends media streams to the resource server, so as to save the network transmission resources and alleviate the network burden.

If other terminals receive the media stream, steps 304 and 305 do not need to be performed.

After step 304, the application server may further send a processing result message indicating that the receiving terminal has been prohibited from viewing videos from other terminals to the terminal functioning as the host, and meanwhile terminates an implicit subscription generated by the "REFER" message. The prohibited receiving terminal cannot apply for viewing videos from other terminals until the prohibited state thereof is cancelled by the terminal functioning as the host.

In addition, after step 301, the application server may further add the SIP URI of the receiving terminal to a black list prohibited from viewing videos from other terminals. In this way, in step 202, after receiving the viewing request message, the application server determines whether the SIP URI of the receiving terminal carried in the viewing request message exists in the black list. If the SIP URL of the receiving terminal does not exist in the black list, the application server continues to perform the subsequent procedure to determine whether an uplink media channel from the sending terminal to the media resource server connected to the application server exists. If the SIP URL of the receiving terminal exists in the black list, the application server does not need to perform the subsequent procedure, but returns a response message indicating that the receiving terminal has no right to view the videos from other terminals to the receiving terminal.

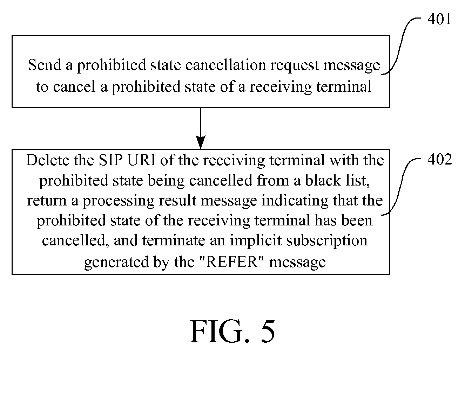

Furthermore, after the receiving terminal is prohibited from viewing the videos from other terminals, the terminal functioning as the host may request the application server to cancel the prohibited state of the receiving terminal at any time. FIG. 5 is a flow chart of yet another embodiment of the video conference method. The specific process of the video conference method in this embodiment is as follows.

In step 401, a terminal functioning as a host sends a prohibited state cancellation request message to an application server to cancel a prohibited state of a receiving terminal. The prohibited state cancellation request message carries a user identification of the receiving terminal with the prohibited state to be cancelled. A destination address of the prohibited state cancellation request message is an identification of the application server. The user identification of the receiving terminal or the identification of the application server is an IP-based SIP URI. The prohibited state cancellation request message may be sent through a "REFER" message. The following shows a specific example of the "REFER" message sent by the terminal functioning as the host to the application server:
REFER sip: conference1@mrfc1.home1.net SIP/2.0
Max-Forwards: 70
P-Preferred-Identity: "John Doe" <sip:user1_public1@home1.net>
From: <sip:user1_public1@home1.net>; tag=171828
To: <sip: conference1@mrfc1.home1.net>; tag=314159
Call-ID: cb03a0s09a2sdfglkj490333
Cseq: 127 REFER
Refer-To: <sip:user2_public1@home2.net> //Permitted participant
User-Agent:Conf-serv/3GPP
Content-Type: application/media SDP
Content-Length: (...)
<query xmlns="dconf:video:enable"/>

In the "REFER" message, From: <sip:user1_public1@home1.net> indicates that a SIP URI of the terminal functioning as the host that sends the "REFER" message is user1_public1@home1. net; To: <sip: conference1@mrfc1.home1.net> indicates that a destination address of the "REFER" message, that is, a SIP URI of the application server that receives the "REFER" message, is conference1@mrfc1.home1.net; Refer-To:<sip:user2_public1@home2.net;method=INVITE> indicates that a SIP URI of the receiving terminal with the prohibited state to be cancelled is user2_public1@home2.net; and <query xmlns="dconfvideo:disable"/> indicates that the receiving terminal is permitted to view video.

In step 402, after receiving the prohibited state cancellation request message, the application server deletes the SIP URI of the receiving terminal with the prohibited state being cancelled from a black list, returns a processing result message indicating that the prohibited state of the receiving terminal has been cancelled to the terminal functioning as the host, and terminates an implicit subscription generated by the "REFER" message.

After the prohibited state of the receiving terminal is cancelled, the receiving terminal can again apply for viewing videos from terminals corresponding to other conference participants.

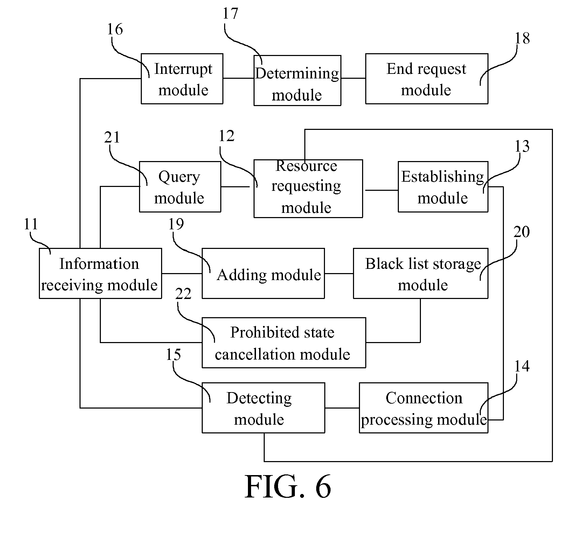

FIG. 6 is a schematic structural view of a plurality of embodiments of an application server. In the first embodiment, the application server includes an information receiving module 11, a resource requesting module 12, and an establishing module 13 that are sequentially connected together, as well as a connection processing module 14 connected to the information receiving module 11.

The information receiving module 11 is adapted to receive a viewing request message sent by a receiving terminal to view a video from a sending terminal and acquire a user identification of the sending terminal and a user identification of the receiving terminal from the viewing request message. The resource requesting module 12 is adapted to send resource request information to a media resource server 2receiving terminal according to the viewing request message and the user identification of the receiving terminal, requesting to allocate media resources to the receiving terminal. The establishing module 13 is adapted to establish a downlink media channel from the media resource server to the receiving terminal according to the resource request information sent by the resource requesting module 12 to allocate media resources to the receiving terminal. The connection processing module 14 is adapted to establish an uplink media connection from the sending terminal to the media resource server and a downlink media connection from the media resource server to the receiving terminal according to the viewing request message, the user identification of the sending terminal, and the user identification of the receiving terminal.

Still referring to FIG. 6, in the second embodiment, the application server further includes a detecting module 15. The detecting module 15 is disposed between the information receiving module 11 and the connection processing module 14, and connected to the information receiving module 11 and the connection processing module 14 respectively. The detecting module 15 is adapted to detect whether an uplink media channel exists between the sending terminal and the media resource server according to the user identification of the sending terminal, after the information receiving module 11 receives the viewing request message. The resource requesting module 12 is connected to the detecting module 15. When no uplink media channel exists between the sending terminal and the media resource server, the resource requesting module 12 requests to allocate media resources to the sending terminal. The establishing module 13 is connected to the connection processing module 14, and establishes the uplink media channel from the sending terminal to the media resource server after the media resources are allocated to the sending terminal.

Still referring to FIG. 6, in the third embodiment, the application server further includes an interrupt module 16. The interrupt module 16 is connected to the information receiving module 11, and adapted to disconnect a media stream being received by the receiving terminal prohibited from viewing videos from other terminals after the information receiving module 11 receives a prohibition request message to prohibit the receiving terminal from viewing videos from other terminals.

Still referring to FIG. 6, in the fourth embodiment, the application server further includes a determining module 17 and an end request module 18 connected to each other. The determining module 17 is connected to the interrupt module 16, and adapted to determine whether the media stream is received by other receiving terminals besides the prohibited receiving terminal, after the interrupt module 16 disconnects the media stream being received by the receiving terminal prohibited from viewing videos from other terminals. The end request module 18 is adapted to notify the media resource server to end the media stream when no other receiving terminals receive the media stream.

Still referring to FIG. 6, in the fifth embodiment, the application server further includes an adding module 19, a black list storage module 20, and a query module 21. The adding module 19 is connected to the information receiving module 11 and the black list storage module 20 each. The query module 21 is disposed between the information receiving module 11 and the resource requesting module 12, and respectively connected to the information receiving module 11 and the resource requesting module 12. The black list storage module 20 is adapted to store a black list that records user identifications of terminals prohibited from viewing videos from other terminals. The adding module 19 is adapted to add a user identification of the receiving terminal prohibited from viewing videos from other terminals to the black list, after the information receiving module 11 receives the prohibition request message. The query module 21 is adapted to query whether a user identification of the receiving terminal that sends the viewing request message exists in the black list after the information receiving module 11 receives the viewing request message, and if the user identification of the receiving terminal does not exist in the black list, instruct the resource requesting module 12 to request to allocate media resources to the receiving terminal, and if the user identification of the receiving terminal exists in the black list, instruct the information receiving module 11 to feed back response information indicating that the receiving terminal has no right to view videos from other terminals to the receiving terminal.

Still referring to FIG. 6, in the sixth embodiment, the application server further includes a prohibited state cancellation module 22. The prohibited state cancellation module 22 is connected to both the information receiving module 11 and the black list storage module 20, and adapted to delete the user identification of the receiving terminal from the black list stored in the black list storage module 20 when the information receiving module 11 receives a prohibited state cancellation request message to cancel a prohibited state of the receiving terminal.

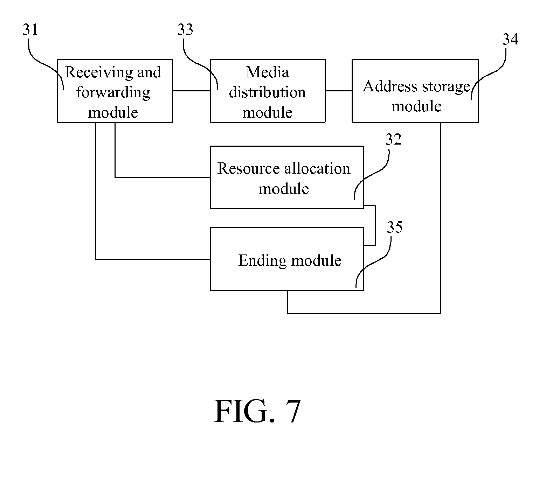

FIG. 7 is a schematic structural view of a plurality of embodiments of a media resource server. In the first embodiment, the media resource server includes a resource allocation module 32, an information receiving and forwarding module 31, and a media distribution module 33 that are sequentially connected together. The information receiving and forwarding module 31 is adapted to perform information exchange and receive and forward resource request information and a media stream among the media resource server, an application server, and terminals. In addition, the information receiving and forwarding module 31 also receives and forwards response information indicating that media resources have been allocated. The resource allocation module 32 is adapted to allocate media resources to a terminal corresponding to a user identification carried in the resource request information according to the resource request information forwarded by the information receiving and forwarding module 31, and return response information indicating that the media resources have been allocated to the information receiving and forwarding module 31. The media distribution module 33 is adapted to establish connections between a sending terminal and a receiving terminal according to the link addresses of the sending terminal and the receiving terminal, where the link addresses are carried in the resource request information received by the information receiving and forwarding module 31, and send a media stream to the receiving terminal through the link address of the receiving terminal, where media stream is sent by the sending terminal through the link address of the sending terminal.

Still referring to FIG. 7, in the second embodiment, the media resource server further includes an address storage module 34. The address storage module 34 is connected to the media distribution module 33, and provided for the media distribution module 33 to store the link addresses of the sending terminal and the receiving terminal, where the link addresses are carried in the resource request information received by the information receiving and forwarding module 31.

Still referring to FIG. 7, in the third embodiment, the media resource server further includes an ending module 35. The ending module 35 is disposed between the information receiving and forwarding module 31 and the address storage module 34, and connected to the information receiving and forwarding module 31 and the address storage module 34 each. The ending module 35 is adapted to end the media stream sent by the sending terminal through the link address of the sending terminal when no receiving terminal receives the media stream of the sending terminal forwarded by the information receiving and forwarding module 31 receiving terminal.

Still referring to FIG. 7, in the fourth embodiment, in the media resource server, the resource allocation module 32 is further connected to the ending module 35. After the ending module 35 ends the media stream, the resource allocation module 32 is adapted to release media resources allocated to the sending terminal that sends the media stream.

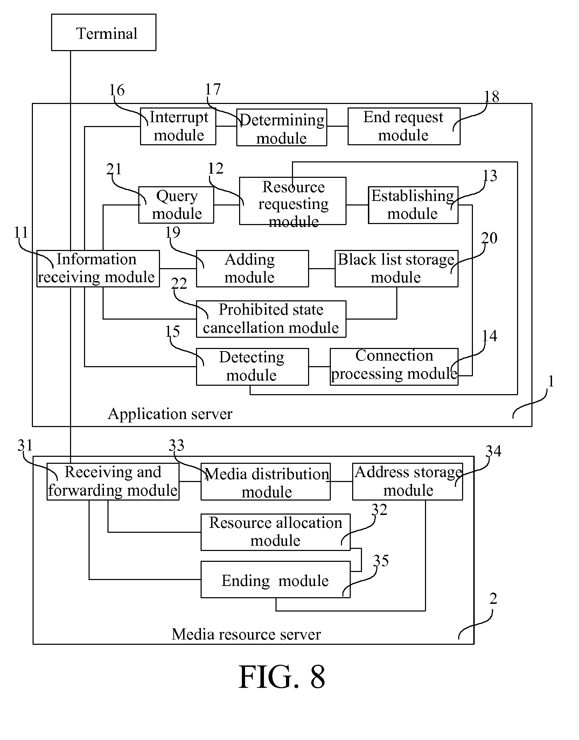

FIG. 8 is a schematic structural view of a plurality of embodiments of a video conference system. The video conference system according to the plurality of embodiments includes an application server 1 and a media resource server 2.

The application server 1 is adapted to receive a viewing request message sent by a receiving terminal to view a video from a sending terminal, acquire a user identification of the sending terminal and a user identification of the receiving terminal from the viewing request message, send resource request information to the media resource server 2 to request the media resource server 2 to allocate media resources to the receiving terminal, establish a downlink media channel from the media resource server 2 to the receiving terminal, and establish an uplink media connection from the sending terminal to the media resource server 2 and a downlink media connection from the media resource server 2 to the receiving terminal. The media resource server 2 is adapted to receive the resource request information sent by the application server 1, allocate media resources to a terminal corresponding to a user identification carried in the resource request information, establish a connection between the sending terminal and the receiving terminal according to the link addresses of the sending terminal and the receiving terminal, where the link addresses are carried in the resource request information, and send a media stream to the receiving terminal through the link address of the receiving terminal, where the media stream is sent by the sending terminal through the link address of the sending terminal. Specifically, the application server 1 may employ an application server provided in any embodiment shown in FIG. 6, and the media resource server 2 may employ a media resource server provided in any embodiment shown in FIG. 7. The information receiving module 11 in the application server 1 and the information receiving and forwarding module 31 in the media resource server 2 are adapted to exchange information such as resource request information and transfer a media stream between the application server 1 and the media resource server 2.

In the first embodiment, when the application server 1 employs the application server in the first embodiment shown in FIG. 6, the media resource server 2 employs the media resource server in the first embodiment shown in FIG. 7, the information receiving module 11 communicates with and is connected to the terminals and forwards messages between the terminals and the video conference system in the present invention, and the information receiving and forwarding module 31 is connected to the establishing module 13 and the connection processing module 14. In the second and third embodiments, the application server 1 further employs the second and third embodiments shown in FIG. 6. In the fourth embodiment, the application server 1 further employs the fourth embodiment shown in FIG. 6, and the media resource server 2 further employs the media resource server according to the third embodiment shown in FIG. 7. In the fifth and sixth embodiments, the application server 1 further employs the fifth and sixth embodiments shown in FIG. 6. In the seventh embodiment, the media resource server 2 further employs the media resource server according to the fourth embodiment shown in FIG. 7.

Those of ordinary skill in the art should understand that all or a part of the steps of the method according to the embodiments of the present invention may be implemented by a program instructing relevant hardware. The program may be stored in a computer-readable storage medium. When the program is executed, the steps of the method according to the embodiments of the present invention are performed. The storage medium may be any medium that is capable of storing program codes such as a Read-Only Memory (ROM), a random access memory (RAM), a magnetic disk, or an optical disk.

In the embodiments of the present invention, a terminal corresponding to any conference participant may act as a receiving terminal to request to view a video from any other sending terminal, and after a viewing request message sent by the receiving terminal is received, a downlink media connection from a media resource server to the receiving terminal is established, and a media stream sent by the sending terminal is sent to the receiving terminal through the downlink media connection. In this way, different participants at the site can freely select to view a video from any other participant through terminals flexibly and conveniently. Moreover, it is not required to support a video-mixing screen, so that the video conference system has a simplified structure and a reduced system costs as compared with the prior art.

Finally, it should be noted that the above embodiments are provided for merely describing the technical solutions of the present invention, but not intended to limit the present invention. It is apparent that those skilled in the art can make various modifications and variations to the invention without departing from the scope of the invention. The invention shall cover the modifications and variations provided that they fall in the scope of protection defined by the following claims or their equivalents.

## Claims

1. A video conference method, comprising:
receiving a viewing request message sent by a receiving terminal to request to view a video from a sending terminal;
establishing an uplink media connection from the sending terminal to a media resource server and a downlink media connection from the media resource server to the receiving terminal; and
receiving a media stream sent by the sending terminal through the uplink media connection, and sending the media stream to the receiving terminal through the downlink media connection.

2. The video conference method according to claim 1, wherein the establishing the uplink media connection from the sending terminal to the media resource server further comprises:
determining whether an uplink media channel from the sending terminal to the media resource server exists ; if the uplink media channel does not exist, allocating media resources to the sending terminal, establishing the uplink media channel from the sending terminal to the media resource server, and establishing the uplink media connection from the sending terminal to the media resource server; and if the uplink media channel exists, directly establishing the uplink media connection from the sending terminal to the media resource server; and/or
the establishing the downlink media connection from the media resource server to the receiving terminal further comprises:
allocating media resources to the receiving terminal, establishing a downlink media channel from the media resource server to the receiving terminal, and establishing the downlink media connection from the media resource server to the receiving terminal.

3. The video conference method according to claim 1, wherein after the establishing the uplink media connection from the sending terminal to the media resource server, the method further comprises: acquiring session description protocol, SDP, information of the sending terminal, and refreshing SDP information of the sending terminal in the media resource server by using the acquired SDP information.

4. The video conference method according to claim 1, further comprising:
disconnecting the media stream being received by the receiving terminal after receiving a prohibition request message to prohibit the receiving terminal from viewing videos from other terminals; and

5. The video conference method according to claim 4, wherein after the disconnecting the media stream being received by the receiving terminal, the video conference method further comprises:
determining whether other receiving terminals receive the media streamreceiving terminal, and if no other receiving terminals receive the media stream, ending the media stream.

6. The video conference method according to claim 5, wherein after the media stream is ended, the method further comprises: releasing media resources allocated to the sending terminal that provides the media stream.

7. The video conference method according to claim 4 or 5, wherein after the prohibition request message is received, a user identification of the receiving terminal is further added to a black list prohibited from viewing videos from other terminals.

8. The video conference method according to claim 7, wherein after the viewing request message is received, the method further comprises:
determining whether a user identification of the receiving terminal exists in a black list;
establishing the uplink media connection from the sending terminal to the media resource server if the user identification of the receiving terminal does not exist in the black list; or returning the receiving terminal a response message indicating that the receiving terminal has no right to view videos from other terminals, if the user identification of the receiving terminal exists in the black list.

9. The video conference method according to claim 7, further comprising:
deleting the user identification of the receiving terminal from the black list after receiving a prohibited state cancellation request message to cancel a prohibited state of the receiving terminal.

10. An application server, comprising:
an information receiving module, adapted to receive a viewing request message sent by a receiving terminal to view a video from a sending terminal and acquire a user identification of the sending terminal and a user identification of the receiving terminal from the viewing request message;
a resource requesting module, adapted to request to allocate media resources to the receiving terminal according to the viewing request message and the user identification of the receiving terminal;
an establishing module, adapted to establish a downlink media channel from a media resource server to the receiving terminal according to the request from the resource requesting module; and
a connection processing module, adapted to establish an uplink media connection from the sending terminal to the media resource server and a downlink media connection from the media resource server to the receiving terminal according to the viewing request message, the user identification of the sending terminal, and the user identification of the receiving terminal.

11. The application server according to claim 10, further comprising:
a detecting module, adapted to detect whether an uplink media channel exists between the sending terminal and the media resource server according to the user identification of the sending terminal after the information receiving module receives the viewing request message, wherein
the resource requesting module requests to allocate media resources to the sending terminal if no uplink media channel exists between the sending terminal and the media resource server; and
the establishing module is further adapted to establish the uplink media channel from the sending terminal to the media resource server after the media resources are allocated to the sending terminal.

12. The application server according to claim 10, further comprising:
an interrupt module, adapted to disconnect a media stream being received by the receiving terminal prohibited from viewing videos from other terminals after the information receiving module receives a prohibition request message to prohibit the receiving terminal from viewing videos from other terminals.

13. The application server according to claim 12, further comprising:
a determining module, adapted to determine whether the media stream is received by other receiving terminals besides the receiving terminal, after the media stream being received by the receiving terminal is disconnected; and
an end request module, adapted to notify to end the media stream when the media stream does not have any other receiving terminal.

14. The application server according to claim 12 or 13, further comprising:
a black list storage module, adapted to store a black list that records user identifications of terminals prohibited from viewing videos from other terminals;
an adding module, adapted to add a user identification of the receiving terminal prohibited from viewing videos from other terminals to the black list after the information receiving module receives the prohibition request message; and
a query module, adapted to query whether a user identification of the receiving terminal that sends the viewing request message exists in the black list after the information receiving module receives the viewing request message; and instruct the resource requesting module to request to allocate media resources to the receiving terminal if the user identification of the receiving terminal does not exist in the black list; or instruct the information receiving module to feed back response information indicating that the receiving terminal has no right to view videos from other terminals to the receiving terminal if the user identification of the receiving terminal exists in the black list.

15. The application server according to claim 14, further comprising:
a prohibited state cancellation module, adapted to delete the user identification of the receiving terminal from the black list storage module when the information receiving module receives a prohibited state cancellation request message to cancel a prohibited state of the receiving terminal.

16. A media resource server, comprising:
an information receiving and forwarding module, adapted to receive and forward resource request information and a media stream;
a resource allocation module, adapted to allocate media resources to a terminal corresponding to a user identification carried in the resource request information according to the resource request information received by the information receiving and forwarding module; and
a media distribution module, adapted to establish a connection between a sending terminal and a receiving terminal according to the link addresses of the sending terminal and the receiving terminal, wherein the link addresses are carried in the resource request information received by the information receiving and forwarding module, and send a media stream to the receiving terminal through the link address of the receiving terminal, wherein the media stream is sent by the sending terminal through the link address of the sending terminal.

17. The media resource server according to claim 16, further comprising:
an address storage module, adapted to store the link addresses of the sending terminal and the receiving terminal, wherein the link addresses are carried in the resource request information received by the information receiving and forwarding module.

18. The media resource server according to claim 17, further comprising:
a ending module, adapted to end the media stream sent by the sending terminal through the link address of the sending terminal when no receiving terminal receives the media stream of the sending terminal forwarded by the information receiving and forwarding module.

19. The media resource server according to claim 18, wherein the resource allocation module is connected to the ending module and adapted to release media resources allocated to the sending terminal after the media stream is ended.

20. A video conference system, comprising: an application server and a media resource server, wherein
the application server is adapted to receive a viewing request message sent by a receiving terminal to view a video from a sending terminal, acquire a user identification of the sending terminal and a user identification of the receiving terminal from the viewing request message, request the media resource server to allocate media resources to the receiving terminal, establish a downlink media channel from the media resource server to the receiving terminal, and establish an uplink media connection from the sending terminal to the media resource server and a downlink media connection from the media resource server to the receiving terminal; and
the media resource server is adapted to receive resource request information sent by the application server, allocate media resources to a terminal corresponding to a user identification carried in the resource request information, establish a connection between the sending terminal and the receiving terminal according to the link addresses of the sending terminal and the receiving terminal, wherein the link addresses are carried in the resource request information, and send a media stream to the receiving terminal through the link address of the receiving terminal, wherein the media stream is sent by the sending terminal through the link address of the sending terminal.

21. The video conference system according to claim 20, wherein
the application server further comprises:
an information receiving module, adapted to receive the viewing request message sent by the receiving terminal to view the video from the sending terminal and acquire the user identification of the sending terminal and the user identification of the receiving terminal from the viewing request message;
a resource requesting module, adapted to request to allocate media resources to the receiving terminal according to the viewing request message and the user identification of the receiving terminal;
an establishing module, adapted to establish the downlink media channel from the media resource server to the receiving terminal according to the request from the resource requesting module; and
a connection processing module, adapted to establish the uplink media connection from the sending terminal to the media resource server and the downlink media connection from the media resource server to the receiving terminal according to the viewing request message, the user identification of the sending terminal, and the user identification of the receiving terminal; and
the media resource server further comprises:
an information receiving and forwarding module, adapted to receive and forward the resource request information sent by the information receiving module, and receive a media stream and forward the media stream to the information receiving module;
a resource allocation module, adapted to allocate media resources to the terminal corresponding to the user identification carried in the resource request information according to the resource request information received by the information receiving and forwarding module; and
a media distribution module, adapted to establish the connection between the sending terminal and the receiving terminal according to the link addresses of the sending terminal and the receiving terminal, wherein the link addresses are carried in the resource request information received by the information receiving and forwarding module, and send the media stream to the receiving terminal through the link address of the receiving terminal, wherein the media stream is sent by the sending terminal through the link address of the sending terminal.

22. The video conference system according to claim 21, wherein the application server further comprises:
a detecting module, adapted to detect whether an uplink media channel exists between the sending terminal and the media resource server according to the user identification of the sending terminal after the information receiving module receives the viewing request message, and
the resource requesting module requests to allocate media resources to the sending terminal when no uplink media channel exists between the sending terminal and the media resource server; and
the establishing module establishes the uplink media channel from the sending terminal to the media resource server after the media resources are allocated to the sending terminal.

23. The video conference system according to claim 21, wherein the application server further comprises:
an interrupt module, adapted to disconnect a media stream being received by the receiving terminal prohibited from viewing videos from other terminals after the information receiving module receives a prohibition request message to prohibit the receiving terminal from viewing videos from other terminals.

24. The video conference system according to claim 23, wherein the application server further comprises:
a determining module, adapted to determine whether the media stream is received by other receiving terminals besides the receiving terminal, after the media stream being received by the receiving terminal is disconnected; and
a end request module, adapted to notify to end the media stream when the media stream does not have any other receiving terminal; and
the media resource server further comprises:
an address storage module, adapted to store the link addresses of the sending terminal and the receiving terminal, wherein the link addresses are carried in the resource request information received by the information receiving and forwarding module.

25. The video conference system according to claim 24, wherein the media resource server further comprises:
a ending module, adapted to end the media stream sent by the sending terminal through the link address of the sending terminal when no receiving terminal receives the media stream of the sending terminal forwarded by the information receiving and forwarding module.

26. The video conference system according to claim 23, 24, or 25, wherein the application server further comprises:
a black list storage module, adapted to store a black list that records user identifications of terminals prohibited from viewing videos from other terminals;
an adding module, adapted to add a user identification of the receiving terminal prohibited from viewing videos from other terminals to the black list, after the information receiving module receives the prohibition request message; and
a query module, adapted to query whether a user identification of the receiving terminal that sends the viewing request message exists in the black list after the information receiving module receives the viewing request message; and instruct the resource requesting module to request to allocate media resources to the receiving terminal if the user identification of the receiving terminal does not exist in the black list, or instruct the information receiving module to feed back response information indicating that the receiving terminal has no right to view videos from other terminals to the receiving terminal if the user identification of the receiving terminal exists in the black list.

27. The video conference system according to claim 26, wherein the application server further comprises:
a prohibited state cancellation module, adapted to delete the user identification of the receiving terminal from the black list storage module when the information receiving module receives a prohibited state cancellation request message to cancel a prohibited state of the receiving terminal.

28. The video conference system according to claim 21, wherein the resource allocation module is connected to the ending module and adapted to release media resources allocated to the sending terminal after the media stream is ended.
